# EUROPEAN PATENT APPLICATION

(11) **EP 3 239 955 A1**
(43) Date of publication of application: **01.11.2017**
(21) Application number: 15878346.4
(22) Date of filing: 19.01.2015
(51) Int. Cl.: G08G 1/14

(54) **PARKING POSITION CONFIRMATION AND NAVIGATION METHOD, APPARATUS AND SYSTEM**

(71) Applicant: Huawei Technologies Co. Ltd., Shenzhen, Guangdong 518129 (CN)
(72) Inventor: HUANG, Kangmin, Shenzhen Guangdong 518129 (CN); LIAO, Heng, Shenzhen Guangdong 518129 (CN); CHEN, Shanxi, Shenzhen Guangdong 518129 (CN); HUANG, Maosheng, Shenzhen Guangdong 518129 (CN)
(74) Representative: Pfenning, Meinig & Partner mbB
(86) International application number: PCT/CN2015/071029
(87) International publication number: WO 2016/115668

(57) **Abstract**

According to embodiments of the present invention, a method includes: obtaining a first signal indicating a behavior of a vehicle driver; predicting, based on the first signal indicating the behavior of the vehicle driver, use status information, within a subsequent time, of a parking space used by the vehicle driver; and controlling, based on the use status information, within the subsequent time, of the parking space used by the vehicle driver, a status indication of the parking space, where the status indication of the parking space is used to indicate that the parking space is available, occupied, or to be available. Efficiency of searching for a parking space by a user when parking spaces are inadequate is improved.

## Description

### TECHNICAL FIELD

The present invention relates to the computer field, and provides a parking space determining method and apparatus, a parking space navigation method and apparatus, and a system.

### BACKGROUND

With development of technologies of indoor positioning and intelligent terminals, not only the technologies of indoor positioning and intelligent terminals have rich applications in many aspects such as mall positioning and commodity recommendation, but also parking space management and parking lot navigation also gradually become IT-based and intelligent.

For existing indoor parking space navigation, availability or occupation information of a parking space is used to navigate a vehicle driver to an available parking space, making it convenient for a user to find a parking space efficiently, so that trouble and time that are taken to search for a parking space are saved.

However, in a garage in which parking spaces are relatively inadequate, there exists a case in which no parking space is available. A current system cannot resolve such a difficulty, and cannot give any prompt to a user to search for a parking space. In such a scenario, the user has trouble searching for a parking space.

### SUMMARY

Embodiments of the present invention provide a parking space determining method and apparatus, a parking space navigation method and apparatus, and a system, to improve efficiency of searching for a parking space by a user when parking spaces are inadequate.

An embodiment of a first aspect of the present invention provides a parking space determining method for a parking space, including: obtaining a first signal indicating a behavior of a vehicle driver; predicting, based on the first signal indicating the behavior of the vehicle driver, use status information, within a subsequent time, of a parking space used by the vehicle driver; and controlling, based on the use status information, within the subsequent time, of the parking space used by the vehicle driver, a status indication of the parking space, where the status indication of the parking space is used to indicate that the parking space is available, occupied, or to be available.

In an implementation manner of the first aspect, the obtaining a first signal indicating a behavior of a vehicle driver includes: obtaining information of a payment behavior of the vehicle driver; and the predicting, based on the first signal indicating the behavior of the vehicle driver, use status information, within a subsequent time, of a parking space used by the vehicle driver includes: predicting, based on the information of the payment behavior of the vehicle driver, that the parking space used by the vehicle driver is available within a subsequent first time.

In an implementation manner of the first aspect, the obtaining a first signal indicating a behavior of a vehicle driver includes: obtaining information of a behavior of entering a range of a geo-fence of the vehicle driver; and the predicting, based on the first signal indicating the behavior of the vehicle driver, use status information, within a subsequent time, of a parking space used by the vehicle driver includes: if the vehicle driver is within the range of the geo-fence, predicting that the parking space used by the vehicle driver is available within a subsequent second time.

In an implementation manner of the first aspect, the geo-fence is generated by means of presetting, and before the predicting use status information, within a subsequent time, of a parking space used by the vehicle driver, the method further includes: generating the geo-fence according to a circle using a position of the parking space used by the vehicle driver as a center and a preset distance as a radius.

In an implementation manner of the first aspect, the geo-fence is dynamically generated according to behavior information of the vehicle driver, and before the predicting use status information, within a subsequent time, of a parking space used by the vehicle driver, the method further includes: using a position of the parking space used by the vehicle driver as a center of a circle; continuously obtaining a distance between a position of the vehicle driver and a position of the parking space used by the vehicle driver, and determining a radius of the circle according to the distance; and generating the geo-fence by using the circle.

In an implementation manner of the first aspect, the obtaining a first signal indicating a behavior of a vehicle driver includes: obtaining information of a parking space use time entered by the vehicle driver; and the predicting, based on the first signal indicating the behavior of the vehicle driver, use status information, within a subsequent time, of a parking space used by the vehicle driver includes: predicting that the parking space used by the vehicle driver is available within a subsequent third time, where the third time is obtained by means of calculation according to the parking space use time entered by the vehicle driver.

With reference to the foregoing possible implementation manners, the status indication of the parking space indicates a status of the parking space by using a color of a status light; and the controlling, based on the use status information, within the subsequent time, of the parking space used by the vehicle driver, a status indication of the parking space includes: if the parking space used by the vehicle driver is to be available within the subsequent time, controlling the status light of the parking space to be switched to a color corresponding to a to-be-available state of the parking space.

With reference to the foregoing possible implementations, the status indication of the parking space indicates the to-be-available state of the parking space by using a digital light having a particular color; and the controlling, based on the use status information, within the subsequent time, of the parking space used by the vehicle driver, a status indication of the parking space includes: based on the predicting that the parking space used by the vehicle driver is available within a subsequent first time, a subsequent second time, or a subsequent third time, predicting, according to the first time, the second time, or the third time, that the parking space is available within a fourth time, and displaying the fourth time by using the digital light having the particular color.

An embodiment of a second aspect of the present invention provides a parking space determining apparatus for a parking space, where the device includes: a vehicle-owner behavior-information obtaining module, a parking-space status prediction module, and a status-light control module, where the vehicle-owner behavior-information obtaining module is configured to obtain a first signal indicating a behavior of a vehicle driver; the parking-space status prediction module is configured to predict, based on the first signal indicating the behavior of the vehicle driver, use status information, within a subsequent time, of a parking space used by the vehicle driver; and the status-light control module is configured to control, based on the use status information, within the subsequent time, of the parking space used by the vehicle driver, a status indication of the parking space, where the status indication of the parking space is used to indicate that the parking space is available, occupied, or to be available.

In an implementation manner of the embodiment of the second aspect, the vehicle-owner behavior-information obtaining module is specifically configured to obtain information of a payment behavior of the vehicle driver; and the parking-space status prediction module is specifically configured to predict, based on the information of the payment behavior of the vehicle driver, that the parking space used by the vehicle driver is available within a subsequent first time.

In an implementation manner of the embodiment of the second aspect, the vehicle-owner behavior-information obtaining module is specifically configured to obtain information of a behavior of entering a range of a geo-fence of the vehicle driver; and the parking-space status prediction module is specifically configured to: if the vehicle driver is within the range of the geo-fence, predict that the parking space used by the vehicle driver is available within a subsequent second time.

In an implementation manner of the embodiment of the second aspect, the apparatus further includes a geo-fence generation module, where the geo-fence is generated by means of presetting, and before the predicting use status information, within a subsequent time, of a parking space used by the vehicle driver, the geo-fence generation module is configured to generate the geo-fence according to a circle using a position of the parking space used by the vehicle driver as a center and a preset distance as a radius.

In an implementation manner of the embodiment of the second aspect, the apparatus further includes a geo-fence generation module, where the geo-fence is dynamically generated according to behavior information of the vehicle driver, and before the predicting use status information, within a subsequent time, of a parking space used by the vehicle driver, the geo-fence generation module uses a position of the parking space used by the vehicle driver as a center of a circle, continuously obtains a distance between a position of the vehicle driver and a position of the parking space used by the vehicle driver, to determine a radius of the circle according to the distance, and generates the geo-fence by using the circle.

In an implementation manner of the embodiment of the second aspect, the vehicle-owner behavior-information obtaining module is specifically configured to obtain information of a parking space use time entered by the vehicle driver; and the parking-space status prediction module is specifically configured to predict that the parking space used by the vehicle driver is available within a subsequent third time, where the third time is obtained by means of calculation according to the information of the parking space use time entered by the vehicle driver.

With reference to the implementation manners of the embodiment of the second aspect, the status indication of the parking space indicates a status of the parking space by using a color of a status light; and the status-light control module is specifically configured to: if the parking space used by the vehicle driver is to be available within the subsequent time, control the status light of the parking space to be switched to a color corresponding to a to-be-available state of the parking space.

With reference to the implementation manners of the embodiment of the second aspect, the status indication of the parking space indicates the to-be-available state of the parking space by using a digital light having a particular color; and the status-light control module is specifically configured to: based on the predicting that the parking space used by the vehicle driver is available within a subsequent first time, a subsequent second time, or a subsequent third time, predict, according to the first time, the second time, or the third time, that the parking space is available within a fourth time, and display the fourth time by using the digital light having the particular color.

An embodiment of a third aspect of the present invention provides a parking space navigation method, where the method includes: obtaining a quantity of available parking spaces in a garage; if the quantity of available parking spaces in the garage is zero, obtaining information of a to-be-available parking space; and navigating a user to a position of the to-be-available parking space according to the information of the to-be-available parking space.

In an implementation manner of the embodiment of the third aspect, the to-be-available parking space includes multiple to-be-available parking spaces; before the navigating a user to a position of the to-be-available parking space, the method further includes: presenting information of the multiple to-be-available parking spaces to the user for the user to select a to-be-available parking space, where the information of the parking spaces includes positions and predicted available times of the parking spaces; and the navigating a user to a position of the to-be-available parking space includes: receiving the to-be-available parking space selected by the user, and navigating the user to a position of the to-be-available parking space selected by the user.

In an implementation manner of the embodiment of the third aspect, the to-be-available parking space includes multiple to-be-available parking spaces; before the navigating a user to a position of the to-be-available parking space, the method further includes: selecting, from the multiple to-be-available parking spaces, a parking space whose predicted available time is closest; and the navigating a user to a position of the to-be-available parking space includes: navigating the user to a position of the parking space whose predicted available time is closest.

An embodiment of a fourth aspect of the present invention provides a parking space navigation apparatus, where the apparatus includes a quantity-of-available-parking-spaces obtaining module, a to-be-available parking space obtaining module, and a navigation module, where the quantity-of-available-parking-spaces obtaining module is configured to obtain a quantity of available parking spaces in a garage; if the quantity of available parking spaces in the garage is zero, the to-be-available parking space obtaining module is configured to obtain information of a to-be-available parking space; and the navigation module is configured to navigate a user to a position of the to-be-available parking space according to the information of the to-be-available parking space.

In an implementation manner of the embodiment of the fourth aspect, the to-be-available parking space includes multiple to-be-available parking spaces; the apparatus further includes an available-parking-space selection module, where the available-parking-space selection module is configured to: present information of the multiple to-be-available parking spaces to the user for the user to select a to-be-available parking space, where the information of the parking spaces includes positions and predicted available times of the parking spaces; and receive the to-be-available parking space selected by the user; and the navigation module is configured to navigate the user to a position of the to-be-available parking space selected by the user.

In an implementation manner of the embodiment of the fourth aspect, the to-be-available parking space includes multiple to-be-available parking spaces; the apparatus further includes an available-parking-space selection module, where the available-parking-space selection module is configured to select, from the multiple to-be-available parking spaces, a parking space whose predicted available time is closest; and the navigation module is configured to navigate the user to a position of the parking space whose predicted available time is closest.

The navigation apparatus in this embodiment of the present invention is configured to: obtain a quantity of available parking spaces in a garage; if the quantity of available parking spaces in the garage is zero, obtain information of a to-be-available parking space by using the parking space determining apparatus for a parking space; and navigate a user to a position of the to-be-available parking space according to the information of the to-be-available parking space.

### BRIEF DESCRIPTION OF DRAWINGS

FIG. 1 is a flowchart of an embodiment of a parking space determining method for a parking space according to the present invention;
FIG. 2 is a flowchart of another embodiment of a parking space determining method for a parking space according to the present invention;
FIG. 3 is a structural diagram of an embodiment of an available-parking-space determining apparatus according to the present invention;
FIG. 4 is a structural diagram of another embodiment of an available-parking-space determining apparatus according to the present invention;
FIG. 5 is a flowchart of an embodiment of a parking space navigation method according to the present invention;
FIG. 6 (a) and FIG. 6 (b) are a flowchart of another embodiment of a parking space navigation method according to the present invention;
FIG. 7 is a structural diagram of an embodiment of a parking space navigation apparatus according to the present invention;
FIG. 8 is a structural diagram of another embodiment of a parking space navigation apparatus according to the present invention;
FIG. 9(a) and FIG. 9(b) are a structural diagram of an embodiment of a parking space service system according to the present invention; and
FIG. 10 is a structural diagram of another embodiment of a parking space service system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

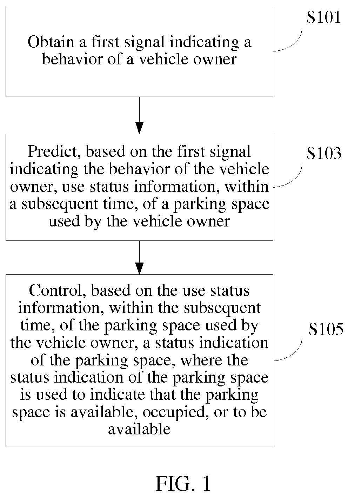

An embodiment of the present invention provides a parking space determining method for a parking space. As shown in FIG. 1, FIG. 1 provides a flowchart of an embodiment of a parking space determining method for a parking space of the present invention. The method includes: S101: Obtain a first signal indicating a behavior of a vehicle driver. S103: Predict, based on the first signal indicating the behavior of the vehicle driver, use status information, within a subsequent time, of a parking space used by the vehicle driver. S105: Control, based on the use status information, within the subsequent time, of the parking space used by the vehicle driver, a status indication of the parking space, where the status indication of the parking space is used to indicate that the parking space is available, occupied, or to be available.

Currently, a status light in a garage uses two states to indicate that a parking space is occupied or available, so that a user selects a parking space according to indication of the status light. However, if all or most of parking spaces in the garage are in an occupied state, it is difficult for the user to find a parking space to park. To-be-available indication of the status light helps the user find a to-be-available parking space, and helps to guide the user to wait near the to-be-available parking space, to avoid that it is difficult for the user to find a parking space and the user keeps driving around in the garage.

In an embodiment of the present invention, the obtaining a first signal indicating a behavior of a vehicle driver includes: obtaining information of a payment behavior of the vehicle driver; and the predicting, based on the first signal indicating the behavior of the vehicle driver, use status information, within a subsequent time, of a parking space used by the vehicle driver includes: predicting, based on the information of the payment behavior of the vehicle driver, that the parking space used by the vehicle driver is available within a subsequent first time.

In a parking garage of a large-scale supermarket or mall, after a user completes payment, it means that the user is returning to a parking space to retrieve a vehicle. After the user completes the payment, generally it indicates that the parking space used by the vehicle driver is available within a subsequent first time. Information of a payment behavior of the user is obtained by a garage management system. The garage management system may obtain the information of the payment behavior by means of a mall member account of the user, or may obtain the information of the payment behavior by means of a payment account such as a payment bank card, WeChat, and Yu'ebao. The information of the payment behavior may also be obtained in another manner, which is not limited to the foregoing manners.

In an embodiment of the present invention, the first time is obtained by adding a first time period to a moment at which a payment behavior occurs, where the first time period may be obtained by calculating a distance from a payment location to the parking space, or may be obtained by means of calculation according to an average time of the user from the payment location to the garage, or may be preset according to an empirical value. A method for calculating the first time period is not limited to the foregoing methods. In a large-scale supermarket or mall, if the vehicle driver performs a payment behavior, in this embodiment of the present invention, the information is uploaded to the system, and that the parking space of the vehicle driver is to be available is shown by using a status light, which helps to instruct another user that searches for a parking space to wait near this parking space, to avoid that it is difficult for the another user to find a parking space and the another user keeps driving around in the garage.

In another embodiment of the present invention, the obtaining a first signal indicating a behavior of a vehicle driver includes: obtaining information of a behavior of entering a range of a geo-fence of the vehicle driver; and the predicting, based on the first signal indicating the behavior of the vehicle driver, use status information, within a subsequent time, of a parking space used by the vehicle driver includes: if the vehicle driver is within the range of the geo-fence, predicting that the parking space used by the vehicle driver is available within a subsequent second time.

In this embodiment of the present invention, the geo-fence is generated by using the parking space or a position of the garage as a center. If the vehicle driver is within the range of the geo-fence, it is predicted that the parking space used by the vehicle driver is available within the subsequent second time. In this embodiment of the present invention, by means of a position of a user, a method for predicting an available state of a parking space is provided.

In this embodiment of the present invention, if the vehicle driver enters the range of the geo-fence, the information is uploaded to the system in this embodiment of the present invention, and that the parking space of the vehicle driver is to be available is shown by using the status light, which helps to instruct another user that searches for a parking space to wait near this parking space, to avoid that it is difficult for the another user to find a parking space and the another user keeps driving around in the garage.

In an embodiment of the present invention, the second time is obtained by adding a second time period to a moment at which the vehicle driver comes within the range of the geo-fence, where the second time period may be obtained by calculating a distance from a position of the vehicle to the parking space at a detection moment, or may be obtained by means of calculation according to a distance from the geo-fence to the parking space, or may be preset in advance according to an empirical value. A method for calculating the second time period is not limited to the foregoing methods.

In an embodiment of the present invention, the geo-fence is generated by means of presetting, and before the predicting use status information, within a subsequent time, of a parking space used by the vehicle driver, the method further includes S102: Generate the geo-fence.

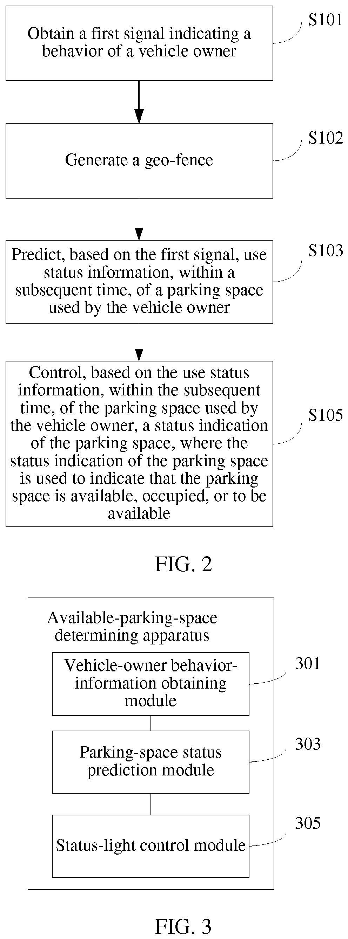

In an embodiment of the present invention, S102 of generating the geo-fence is performed after S101. As shown in FIG. 2, FIG. 2 provides a flowchart of another embodiment according to the present invention. In another embodiment of the present invention, S102 of generating the geo-fence and S101 are performed at the same time, or S102 is performed before S101.

The generating the geo-fence in an embodiment of the present invention specifically includes: generating the geo-fence according to a circle using a position of the parking space used by the vehicle driver as a center and a preset distance as a radius. The geo-fence may also have any other shape.

In an embodiment of the present invention, the geo-fence may be set in the garage. If the vehicle driver appears in the garage, it is considered that the vehicle driver is to retrieve the vehicle from the garage, and the parking space is to be available. Alternatively, if the garage is an underground parking lot, and if the vehicle driver appears on an underground floor, it is determined that the vehicle driver is to return to the garage to retrieve the vehicle.

In an embodiment of the present invention, the geo-fence is dynamically generated according to behavior information of the vehicle driver, and before the predicting use status information, within a subsequent time, of a parking space used by the vehicle driver, the method further includes S102: Generate the geo-fence. In an embodiment, the generating the geo-fence specifically includes: using a position of the parking space used by the vehicle driver as a center of a circle; continuously obtaining a distance between a position of the vehicle driver and a position of the parking space used by the vehicle driver, and determining a radius of the circle according to the distance; and generating the geo-fence by using the circle.

In an embodiment of the present invention, if the garage is a garage at an airport or a railway station, if it is shown, by continuously obtaining the position of the vehicle driver, that the vehicle driver leaves a first city, a range of the first city may be set to be the geo-fence. In a garage at an airport, if it is determined, by continuously obtaining the position of the vehicle driver, that a distance between the position of the vehicle driver and a position of a parking space used by the vehicle driver is greater than one hundred kilometers, the radius of the circle of the geo-fence is set to be in an order of magnitude of ten kilometers. If the vehicle driver returns to the range of the city, in this embodiment of the present invention, the information is uploaded to the system, and that the parking space of the vehicle driver is to be available is shown by using a status light, which helps to instruct another user that searches for a parking space to wait near this parking space, to avoid that it is difficult for the another user to find a parking space and the another user keeps driving around in the garage.

In a garage at a mall, if it is determined, by continuously obtaining the position of the vehicle driver, that a distance between the position of the vehicle driver and a position of a parking space used by the vehicle driver is within one thousand meters, the radius of the circle of the geo-fence is set to be less than one hundred meters. For a method for setting the radius of the geo-fence, another similar method may be used, which is not limited to what is described in the foregoing embodiment.

In an embodiment of the present invention, the obtaining a first signal indicating a behavior of a vehicle driver includes: obtaining information of a parking space use time entered by the vehicle driver; and the predicting, based on the first signal indicating the behavior of the vehicle driver, use status information, within a subsequent time, of a parking space used by the vehicle driver includes: predicting that the parking space used by the vehicle driver is available within a subsequent third time, where the third time is obtained by means of calculation according to the parking space use time entered by the vehicle driver.

In this embodiment of the present invention, the parking space use time entered by the vehicle driver includes a use time of the parking space of the user, or a moment at which the parking space is available.

If the vehicle driver enters information of the parking space use time, in this embodiment of the present invention, the information is uploaded to the system, and that the parking space of the vehicle driver is to be available is shown by using a status light, which helps to instruct another user that searches for a parking space to wait near this parking space, to avoid that it is difficult for the another user to find a parking space and the another user keeps driving around in the garage.

In an embodiment of the present invention, the status indication of the parking space indicates a status of the parking space by using a color of a status light; and the controlling, based on the use status information, within the subsequent time, of the parking space used by the vehicle driver, a status indication of the parking space includes: if the parking space used by the vehicle driver is to be available within the subsequent time, controlling the status light of the parking space to be switched to a color corresponding to a to-be-available state of the parking space.

In an embodiment of the present invention, red is used to indicate that the parking space is in an occupied state, and green is used to indicate that the parking space is in an available state. A color, for example, yellow, other than red and green may be used to indicate that the parking space is to be available.

In an embodiment of the present invention, the status indication of the parking space indicates the to-be-available state of the parking space by using a digital light having a particular color; and the controlling, based on the use status information, within the subsequent time, of the parking space used by the vehicle driver, a status indication of the parking space includes: based on the predicting that the parking space used by the vehicle driver is available within a subsequent first time, a subsequent second time, or a subsequent third time, predicting, according to the first time, the second time, or the third time, that the parking space is available within a fourth time, and displaying the fourth time by using the digital light having the particular color.

In an embodiment of the present invention, red is used to indicate that the parking space is in an occupied state, and green is used to indicate that the parking space is in an available state. A color, for example, yellow, other than red and green may be used as a particular color for indicating that the parking space is to be available.

In an embodiment of the present invention, if it is only predicted, based on the behavior information of the vehicle driver, that the parking space is available within the first time, the fourth time is set as the first time, and it is predicted that the parking space used by the vehicle driver is available within the subsequent fourth time, where the first time is based on the information of the payment behavior of the vehicle driver. In another embodiment of the present invention, if it is only predicted, based on the behavior information of the vehicle driver, that the parking space is available within the second time, the fourth time is set as the first time, and it is predicted that the parking space used by the vehicle driver is available within the subsequent fourth time, and the second time is displayed by using a digital light having a particular color, where the second time is obtained based on the information of the behavior of entering the range of the geo-fence. In still another embodiment of the present invention, if it is only predicted, based on the behavior information of the vehicle driver, that the parking space is available within the third time, the fourth time is set as the third time, and it is predicted that the parking space used by the vehicle driver is available within the subsequent fourth time, and the fourth time is displayed by using a digital light having a particular color, where the third time is obtained based on the information of the parking space use time entered by the vehicle driver. Alternatively, in an embodiment of the present invention, multiple predicted available times of the first time, the second time, and the third time are obtained based on the foregoing different methods, and a time obtained in a prediction manner having higher accuracy is selected as the fourth time based on a preset method, or the fourth time is obtained by means of weighted averaging calculation by using a preset method.

In an embodiment of the present invention, the foregoing information of the vehicle driver may also be obtained and a parking space use status of a parking lot may be provided to the vehicle driver by using a social application. Specifically, the social application may directly receive a map of the parking lot, present an interface, and provide navigation in the parking lot. Further, at a parking request, the social application provides a social account of the user. For the social account, a "circle of friends" for the account of the user using a parking space of the parking lot is obtained by means of matching by a parking lot management system and a related server. A parking space use result of a friend in the "circle of friends" in the foregoing parking lot is displayed on a presentation interface for an indoor map.

Based on the parking request, parking space presentation, and navigation of the foregoing social application, in processes of requesting parking, determining an available parking space, and the like, a computer/mobile terminal/intelligent terminal or another user-side calculation device running the social application interacts with the parking lot management system according to the foregoing methods, and the parking lot management system performs matching of the "circle of friends" by interacting with a server for a particular social system by using a particular interface, sends a matching result to the user-side calculation device, and finally displays the matching result on a presentation interface of the social application.

In one aspect, based on a displayed result of the "circle of friends", after the user selects a particular "friend", the social application provides a capability for granting control permission of the vehicle the selected "friend"/social account. Further, the social application provides setting of such a granted condition, where a condition that is allowed to be set includes, but is not limited to, a geographical location/range, a time range, and whether a third-party (if it is supported by a Key having a parking lot attribute) participates.

In another aspect, when the parking request is submitted by using the social application and the vehicle successfully enters a parking space and is parked, when refreshing the information of a parking space, the parking lot management system refreshes information related to the social application that is managed by the system.

In still another aspect, based on granting of the control permission of the vehicle to the particular "friend"/social account, the social account can obtain, by means of the social application, the control permission of the vehicle whose control permission is granted. Further, when the control permission of the vehicle is granted to the account, the social application for the account obtains a granting notification; when the account obtains the control permission of the vehicle, the social application obtains, based on the foregoing notification within a validity period, the digital Key of the vehicle whose control permission is granted.

In yet another aspect, based on the management of granting of the control permission of the vehicle, the parking lot management system/the server receives the Key of the vehicle when the control permission of the vehicle is granted, and when granting is received, the parking lot management system/the server verifies the information submitted by the receiver and then sends the Key of the vehicle to the receiver.

Obviously, the "circle of friends" that is managed based on the social application and the social system has credibility. Such credibility is contagious for such a special article as a vehicle, that is, if supported by the parking lot management system and related interfaces/connectivity, another application/device having the credibility can carry out the foregoing operation process and have the foregoing user functions. These credible applications include, but are not limited to, a credibility-related APP and a vehicle-insurance-type APP.

An embodiment of the present invention provides a parking space determining apparatus. As shown in FIG. 3, FIG. 3 provides a structural diagram of an embodiment of the parking space determining according to this embodiment of the present invention. The device includes a vehicle-owner behavior-information obtaining module 301, a parking-space status prediction module 303, and a status-light control module 305, where the vehicle-owner behavior-information obtaining module 301 is configured to obtain a first signal indicating a behavior of a vehicle driver; the parking-space status prediction module 303 is configured to predict, based on the first signal indicating the behavior of the vehicle driver, use status information, within a subsequent time, of a parking space used by the vehicle driver; and the status-light control module 305 is configured to control, based on the use status information, within the subsequent time, of the parking space used by the vehicle driver, a status indication of the parking space, where the status indication of the parking space is used to indicate that the parking space is available, occupied, or to be available.

In an embodiment of the present invention, the vehicle-owner behavior-information obtaining module 301 is specifically configured to obtain information of a payment behavior of the vehicle driver; and the parking-space status prediction module 303 is specifically configured to predict, based on the information of the payment behavior of the vehicle driver, that the parking space used by the vehicle driver is available within a subsequent first time.

In an embodiment of the present invention, the information of the payment behavior of the vehicle driver is collected by a terminal device of the vehicle driver, where the terminal device of the vehicle driver has a payment function, and also has a function of sending the information of the payment behavior to an available-parking-space determining apparatus in this embodiment of the present invention. The apparatus for determining a parking space of a vehicle driver in this embodiment of the present invention receives the information of the payment behavior of the vehicle driver collected by the terminal device of the vehicle driver.

In an embodiment of the present invention, the information of the payment behavior of the vehicle driver is collected by a member management system of a mall, and the member management system of the mall sends the information of the payment behavior to an available-parking-space determining apparatus in this embodiment of the present invention. The apparatus for determining a parking space of a vehicle driver in this embodiment of the present invention receives the information of the payment behavior of the vehicle driver collected by the member management system of the mall.

In an embodiment of the present invention, the vehicle-owner behavior-information obtaining module 301 is specifically configured to obtain information of a behavior of entering a range of a geo-fence of the vehicle driver; and the parking-space status prediction module 303 is specifically configured to: if the vehicle driver is within the range of the geo-fence, predict that the parking space used by the vehicle driver is available within a subsequent second time.

In an embodiment of the present invention, the information of the behavior of entering the range of the geo-fence of the vehicle driver is collected by a terminal device of the vehicle driver, where the terminal device of the vehicle driver has functions of positioning and detecting the information of the behavior of entering the range of the geo-fence, and also has a function of sending the information of the behavior of entering the range of the geo-fence to an available-parking-space determining apparatus in this embodiment of the present invention.

In another embodiment of the present invention, a terminal device of the vehicle driver has a positioning function, and also has a function of sending positioning information to an available-parking-space determining apparatus in this embodiment of the present invention. The apparatus for determining a parking space of a vehicle driver in this embodiment of the present invention has a function of receiving the positioning information collected by the terminal device of the vehicle driver and thereby detecting the information of the behavior of entering the range of the geo-fence of the vehicle driver.

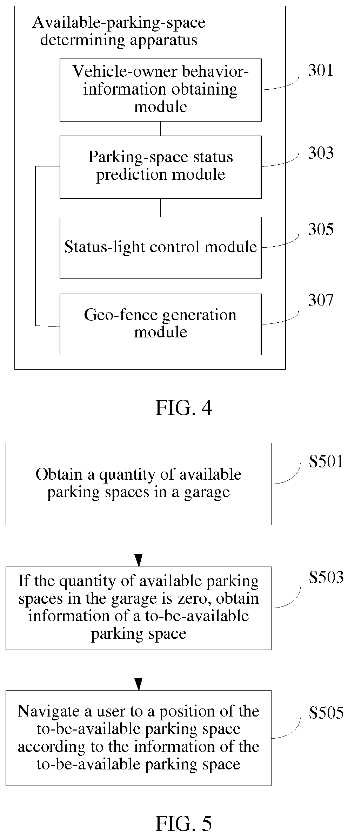

In an embodiment of the present invention, as shown in FIG. 4, FIG. 4 provides a structural diagram of an available-parking-space determining apparatus according to an embodiment of the present invention. The apparatus further includes a geo-fence generation module 307, where the geo-fence is generated by means of presetting, and before the predicting use status information, within a subsequent time, of a parking space used by the vehicle driver, the geo-fence generation module 307 is configured to generate the geo-fence according to a circle using a position of the parking space used by the vehicle driver as a center and a preset distance as a radius.

In an embodiment of the present invention, as shown in FIG. 4, the apparatus further includes a geo-fence generation module 307, where the geo-fence is dynamically generated according to behavior information of the vehicle driver, and before the predicting use status information, within a subsequent time, of a parking space used by the vehicle driver, the geo-fence generation module 307 uses a position of the parking space used by the vehicle driver as a center of a circle, continuously obtains a distance between a position of the vehicle driver and a position of the parking space used by the vehicle driver, to determine a radius of the circle according to the distance, and generates the geo-fence by using the circle.

In an embodiment of the present invention, the vehicle-owner behavior-information obtaining module 301 is specifically configured to obtain information of a parking space use time entered by the vehicle driver; and the parking-space status prediction module 303 is specifically configured to predict that the parking space used by the vehicle driver is available within a subsequent third time, where the third time is obtained by means of calculation according to the information of the parking space use time entered by the vehicle driver.

In an embodiment of the present invention, the status indication of the parking space indicates a status of the parking space by using a color of a status light; and the status-light control module 305 is specifically configured to: if the parking space used by the vehicle driver is to be available within the subsequent time, control the status light of the parking space to be switched to a color corresponding to a to-be-available state of the parking space.

In an embodiment of the present invention, the status indication of the parking space is placed beside the parking space. In a garage, beside each parking space, there is a parking space status indication corresponding to the parking space, to show a status of the parking space, and guide a user to search for a parking space and perform navigation.

In an embodiment of the present invention, the status indication of the parking space indicates the to-be-available state of the parking space by using a digital light having a particular color; and the status-light control module is specifically configured to: based on the predicting that the parking space used by the vehicle driver is available within a subsequent first time, a subsequent second time, or a subsequent third time, predict, according to the first time, the second time, or the third time, that the parking space is available within a fourth time, and display the fourth time by using the digital light having the particular color.

An embodiment of the present invention provides a parking space navigation method. As shown in FIG. 5, FIG. 5 provides a flowchart of the parking space navigation method in this embodiment of the present invention. The method includes: S503: Obtain information of a to-be-available parking space. S505: Navigate a user to a position of the to-be-available parking space according to the information of the to-be-available parking space.

Before S503 of obtaining information of a to-be-available parking space, the method further includes S501: Obtain information of an available parking space in a garage, and if a quantity of available parking spaces in the garage is zero, obtain the information of the to-be-available parking space.

In another embodiment of the present invention, S501 of obtaining information of an available parking space in a garage may also be performed after S503 of obtaining information of a to-be-available parking space, and before S505 of navigating a user to a position of the to-be-available parking space. The navigating a user to a position of the to-be-available parking space includes: if it is determined, based on the information of the available parking space in the garage, that a quantity of available parking spaces is zero, navigating the user to the position of the to-be-available parking space.

In an embodiment of the present invention, the quantity of available parking spaces in the garage in S501 may be obtained by using a scanning device at an entrance or exit of the garage, where the scanning device includes an infrared scanner, or may be obtained by collecting statistics on a quantity of times of opening and closing a gate at the entrance or exit of the garage. Alternatively, the quantity of available parking spaces is obtained by using a sensor matching the parking space. In an embodiment of the present invention, S503 of, if a quantity of available parking spaces in the garage is zero, obtaining the information of the to-be-available parking space may be implemented by using the available-parking-space determining apparatus shown in FIG. 3 or FIG. 4.

In an embodiment of the present invention, the method is cooperatively performed by execution bodies that implement S501 and S503. Alternatively, an execution body of the present invention is a terminal device, and the terminal device performs reception in a communication manner, to obtain information of execution body devices that implement S501 and S503 and that are connected to the terminal device, so as to implement navigation.

By means of the method provided in this embodiment of the present invention, when parking spaces are inadequate or there is no parking space in a garage, the method helps to provide guidance for a user and guide the user to a to-be-available parking space, which can avoid that the user blindly drives around in the garage and wastes time. Efficiency of searching the garage for a parking space by the user is improved. The method in this embodiment of the present invention may be applied to an indoor navigation map or a garage management system.

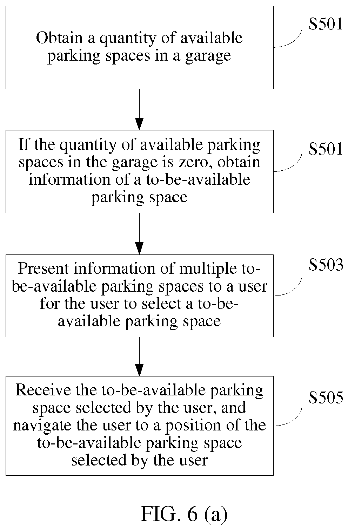

In an embodiment of the present invention, as shown in FIG. 6(a), a flowchart of an embodiment of the parking space navigation method according to the present invention is provided. The to-be-available parking space includes multiple to-be-available parking spaces; before the navigating a user to a position of the to-be-available parking space, the method further includes S504: Present information of the multiple to-be-available parking spaces to the user for the user to select a to-be-available parking space; and S505 of navigating a user to a position of the to-be-available parking space includes: receiving the to-be-available parking space selected by the user, and navigating the user to a position of the to-be-available parking space selected by the user.

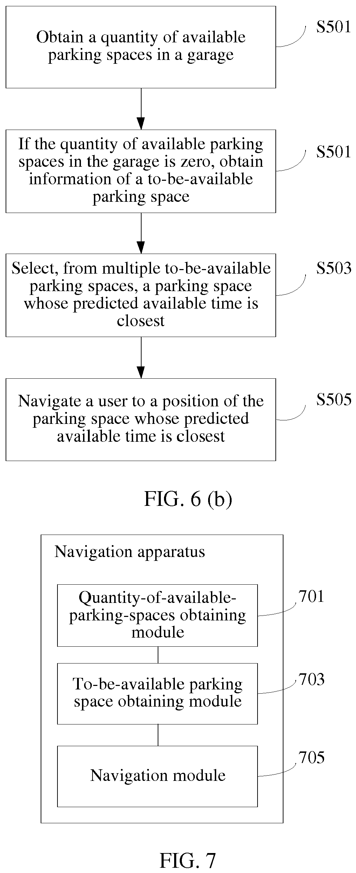

In an embodiment of the present invention, as shown in FIG. 6(b), a flowchart of an embodiment of the parking space navigation method according to the present invention is provided. The to-be-available parking space includes multiple to-be-available parking spaces; before the navigating a user to a position of the to-be-available parking space, the method further includes S504: Select, from the multiple to-be-available parking spaces, a parking space whose predicted available time is closest; and S505 of navigating a user to a position of the to-be-available parking space includes: navigating the user to a position of the parking space whose predicted available time is closest.

An embodiment of the present invention provides a parking space navigation apparatus. As shown in FIG. 7, FIG. 7 provides a structural diagram of an embodiment of the parking space navigation apparatus according to the present invention. The apparatus includes a to-be-available parking space obtaining module 703 and a navigation module 705, where the to-be-available parking space obtaining module 703 is configured to obtain information of a to-be-available parking space; and the navigation module 705 is configured to navigate a user to a position of the to-be-available parking space according to the information of the to-be-available parking space.

In an embodiment of the present invention, the apparatus further includes a quantity-of-available-parking-spaces obtaining module 701, where the quantity-of-available-parking-spaces obtaining module is configured to obtain a quantity of available parking spaces in a garage; and if the quantity of available parking spaces in the garage is zero, the to-be-available parking space obtaining module is configured to obtain the information of the to-be-available parking space.

In an embodiment of the present invention, the apparatus further includes a quantity-of-available-parking-spaces obtaining module 701, where the quantity-of-available-parking-spaces obtaining module is configured to obtain a quantity of available parking spaces in a garage; and if the quantity of available parking spaces in the garage is zero, the navigation module is configured to navigate the user to the position of the to-be-available parking space according to the information of the to-be-available parking space.

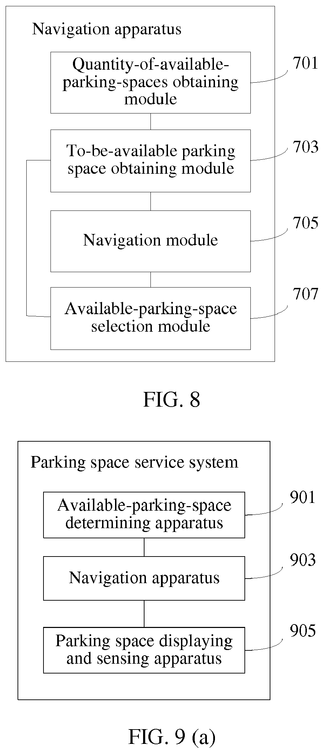

In an embodiment of the present invention, as shown in FIG. 8, FIG. 8 provides a structural diagram of another embodiment of a parking space navigation apparatus according to the present invention. The to-be-available parking space includes multiple to-be-available parking spaces; the apparatus further includes an available-parking-space selection module 707, where the available-parking-space selection module is configured to: present information of the multiple to-be-available parking spaces to the user for the user to select a to-be-available parking space, where the information of the parking spaces includes positions and predicted available times of the parking spaces; and receive the to-be-available parking space selected by the user; and the navigation module 705 is configured to navigate the user to a position of the to-be-available parking space selected by the user.

In an embodiment of the present invention, the to-be-available parking space includes multiple to-be-available parking spaces; the apparatus further includes an available-parking-space selection module 707, where the available-parking-space selection module 707 is configured to select, from the multiple to-be-available parking spaces, a parking space whose predicted available time is closest; and the navigation module 705 is configured to navigate the user to a position of the parking space whose predicted available time is closest.

In an embodiment of the present invention, the apparatus is a terminal device, where an obtaining module of the terminal device includes the quantity-of-available-parking-spaces obtaining module 701 and the to-be-available parking space obtaining module 703, and performs reception in a communication manner, to obtain information of execution body devices that implement S501 and S503 and that are connected to the terminal device, so as to implement navigation. In another embodiment of the present invention, the apparatus is a system apparatus including the execution body devices that implement S501 and S503 and the foregoing terminal device.

An embodiment of the present invention provides a parking space service system. As shown in FIG. (9a), FIG. (9a) provides a structural diagram of an embodiment of the parking space service system according to the present invention. The system includes the parking space determining apparatus 901 described in any one of the foregoing embodiments and the navigation apparatus 903 described in any one of the foregoing embodiments, where the navigation apparatus is configured to: obtain a quantity of available parking spaces in a garage; if the quantity of available parking spaces in the garage is zero, obtain information of a to-be-available parking space by using the parking space determining apparatus; and navigate a user to a position of the to-be-available parking space according to the information of the to-be-available parking space.

The system further includes a parking space displaying and sensing apparatus 903, where a sensing module is configured to obtain the quantity of available parking spaces in the garage, and a displaying module includes a status light and a status digital light for indicating that the parking space is available, occupied, or to be available.

In an embodiment of the present invention, as shown in FIG. (9b), FIG. (9b) provides a structural diagram of an embodiment of a parking space service system according to the present invention. In an actual system, the parking space determining apparatus 901 is cooperatively implemented by using a terminal device of the user and an external information service system, the navigation apparatus 903 is implemented by using a parking lot management system, and the parking space displaying and sensing apparatus 903 corresponds to a parking space displaying and sensing apparatus. The apparatuses are connected by using an Internet.

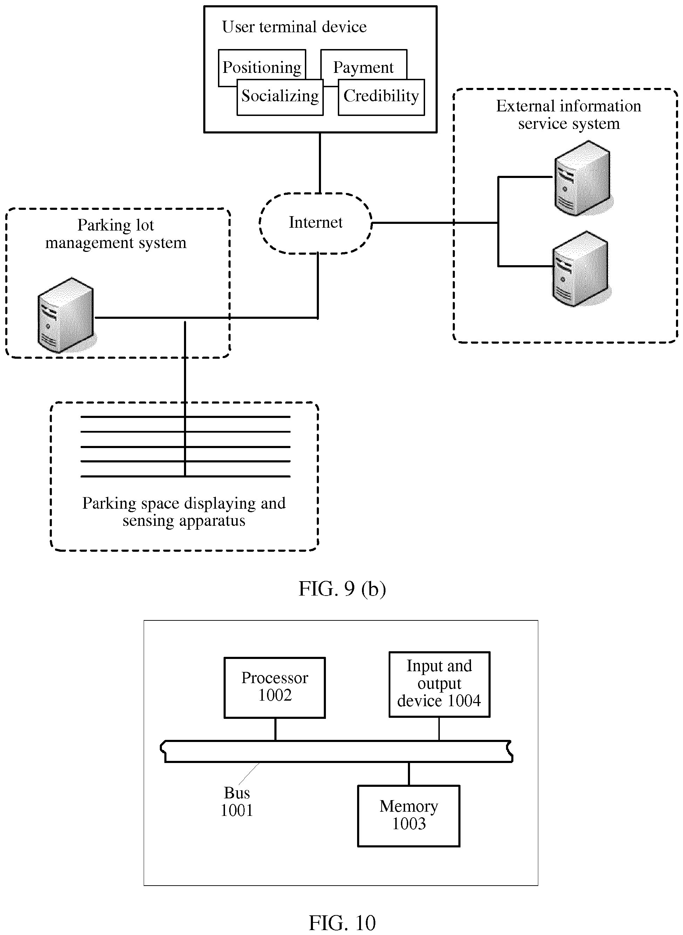

An embodiment of the present invention provides a computer system for a parking space service. As shown in FIG. 10, FIG.10 provides a structural diagram of another embodiment of a parking space service system according to the present invention. The computer system includes a bus 1001, a processor 1002, a memory 1003, and an input and output device 1004. The processor, the memory, and the input and output device are connected by using the bus. The memory is configured to store data and code. The processor is coupled to the memory, and implements, by invoking the data and code in the memory, the following method: obtaining a first signal indicating a behavior of a vehicle driver; predicting, based on the first signal indicating the behavior of the vehicle driver, use status information, within a subsequent time, of a parking space used by the vehicle driver; and controlling, based on the use status information, within the subsequent time, of the parking space used by the vehicle driver, a status indication of the parking space, where the status indication of the parking space is used to indicate that the parking space is available, occupied, or to be available.

In another embodiment of the present invention, the processor is coupled to the memory, and implements, by invoking the data and code in the memory, the following method: obtaining a quantity of available parking spaces in a garage; if the quantity of available parking spaces in the garage is zero, obtaining information of a to-be-available parking space; and navigating a user to a position of the to-be-available parking space according to the information of the to-be-available parking space.

In an embodiment of the present invention, the input and output device 1004 includes a text input device such as a keyboard, a touch display, and a mouse, a camera, a touching module, and the like. The processor coupled to the memory is further configured to: invoke a program or data in the memory to control the camera to collect an image of a first object, where the first object is a part of a human body; and control the touching module to apply the touching signal to the first object.

A person skilled in the art may understand that the accompanying drawings are merely schematic diagrams of exemplary embodiments, and modules or processes in the accompanying drawings are not necessarily required for implementing the present invention.

A person skilled in the art may understand that the modules in the apparatuses provided in the embodiments may be arranged in the apparatuses in a distributed manner according to the description of the embodiments, or may be arranged in one or more apparatuses which are different from those described in the embodiments. The modules in the foregoing embodiments may be combined into one module, or split into a plurality of submodules.

A person of ordinary skill in the art may understand that all or a part of the steps of the methods in the embodiments may be implemented by a program instructing relevant hardware. The program may be stored in a computer readable storage medium, including a ROM/RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A parking space determining method, wherein the method comprises: obtaining a first signal indicating a behavior of a vehicle driver; predicting, based on the first signal indicating the behavior of the vehicle driver, use status information, within a subsequent time, of a parking space used by the vehicle driver, wherein the subsequent time is a time after the first signal is received; and controlling, based on the use status information, within the subsequent time, of the parking space used by the vehicle driver, a status indication of the parking space, wherein the status indication of the parking space is used to indicate that the parking space is available, occupied, or to be available.

2. The method according to claim 1, wherein the obtaining a first signal indicating a behavior of a vehicle driver comprises: obtaining information of a payment behavior of the vehicle driver; and the predicting, based on the first signal indicating the behavior of the vehicle driver, use status information, within a subsequent time, of a parking space used by the vehicle driver comprises: predicting, based on the information of the payment behavior of the vehicle driver, that the parking space used by the vehicle driver is available within a subsequent first time.

3. The method according to claim 1, wherein the obtaining a first signal indicating a behavior of a vehicle driver comprises: obtaining information of a behavior of entering a range of a geo-fence of the vehicle driver; and the predicting, based on the first signal indicating the behavior of the vehicle driver, use status information, within a subsequent time, of a parking space used by the vehicle driver comprises: if the vehicle driver is within the range of the geo-fence, predicting that the parking space used by the vehicle driver is available within a subsequent second time.

4. The method according to claim 3, wherein the geo-fence is generated by means of presetting, and before the predicting use status information, within a subsequent time, of a parking space used by the vehicle driver, the method further comprises: generating the geo-fence according to a circle using a position of the parking space used by the vehicle driver as a center and a preset distance as a radius.

5. The method according to claim 3, wherein the geo-fence is dynamically generated according to behavior information of the vehicle driver, and before the predicting use status information, within a subsequent time, of a parking space used by the vehicle driver, the method further comprises: using a position of the parking space used by the vehicle driver as a center of a circle; continually obtaining a distance between a position of the vehicle driver and a position of the parking space used by the vehicle driver, and determining a radius of the circle according to the distance; and generating the geo-fence by using the circle.

6. The method according to claim 1, wherein the obtaining a first signal indicating a behavior of a vehicle driver comprises: obtaining information of a parking space use time entered by the vehicle driver; and the predicting, based on the first signal indicating the behavior of the vehicle driver, use status information, within a subsequent time, of a parking space used by the vehicle driver comprises: predicting that the parking space used by the vehicle driver is available within a subsequent third time, wherein the third time is obtained by means of calculation according to the information of the parking space use time entered by the vehicle driver.

7. The method according to any one of claims 1 to 6, wherein the status indication of the parking space indicates a status of the parking space by using a color of a status light; and the controlling, based on the use status information, within the subsequent time, of the parking space used by the vehicle driver, a status indication of the parking space comprises: if the parking space used by the vehicle driver is to be available within the subsequent time, controlling the status light of the parking space to be switched to a color corresponding to a to-be-available state of the parking space.

8. The method according to any one of claims 2 to 6, wherein the status indication of the parking space indicates the to-be-available state of the parking space by using a digital light having a particular color; and the controlling, based on the use status information, within the subsequent time, of the parking space used by the vehicle driver, a status indication of the parking space comprises: based on the predicting that the parking space used by the vehicle driver is available within a subsequent first time, a subsequent second time, or a subsequent third time, predicting, according to the first time, the second time, or the third time, that the parking space is available within a fourth time, and displaying the fourth time by using the digital light having the particular color.

9. A parking space determining terminal device for a parking space, wherein the device comprises a vehicle-owner behavior-information obtaining module, a parking-space status prediction module, and a status-light control module, wherein the vehicle-owner behavior-information obtaining module is configured to obtain a first signal indicating a behavior of a vehicle driver; the parking-space status prediction module is configured to predict, based on the first signal indicating the behavior of the vehicle driver, use status information, within a subsequent time, of a parking space used by the vehicle driver; and the status-light control module is configured to control, based on the use status information, within the subsequent time, of the parking space used by the vehicle driver, a status indication of the parking space, wherein the status indication of the parking space is used to indicate that the parking space is available, occupied, or to be available.

10. The apparatus according to claim 9, wherein the vehicle-owner behavior-information obtaining module is specifically configured to obtain information of a payment behavior of the vehicle driver; and the parking-space status prediction module is specifically configured to predict, based on the information of the payment behavior of the vehicle driver, that the parking space used by the vehicle driver is available within a subsequent first time.

11. The apparatus according to claim 9, wherein the vehicle-owner behavior-information obtaining module is specifically configured to obtain information of a behavior of entering a range of a geo-fence of the vehicle driver; and the parking-space status prediction module is specifically configured to: if the vehicle driver is within the range of the geo-fence, predict that the parking space used by the vehicle driver is available within a subsequent second time.

12. The apparatus according to claim 11, wherein the apparatus further comprises a geo-fence generation module, wherein the geo-fence is generated by means of presetting, and before the predicting use status information, within a subsequent time, of a parking space used by the vehicle driver, the geo-fence generation module is configured to generate the geo-fence according to a circle using a position of the parking space used by the vehicle driver as a center and a preset distance as a radius.

13. The apparatus according to claim 12, wherein the apparatus further comprises a geo-fence generation module, wherein the geo-fence is dynamically generated according to behavior information of the vehicle driver, and before the predicting use status information, within a subsequent time, of a parking space used by the vehicle driver, the geo-fence generation module uses a position of the parking space used by the vehicle driver as a center of a circle, continuously obtains a distance between a position of the vehicle driver and the position of the parking space used by the vehicle driver, to determine a radius of the circle according to the distance, and generates the geo-fence by using the circle.

14. The apparatus according to claim 9, wherein the vehicle-owner behavior-information obtaining module is specifically configured to obtain information of a parking space use time entered by the vehicle driver; and the parking-space status prediction module is specifically configured to predict that the parking space used by the vehicle driver is available within a subsequent third time, wherein the third time is obtained by means of calculation according to the information of the parking space use time entered by the vehicle driver.

15. The apparatus according to any one of claims 9 to 14, wherein the status indication of the parking space indicates a status of the parking space by using a color of a status light; and the status-light control module is specifically configured to: if the parking space used by the vehicle driver is to be available within the subsequent time, control the status light of the parking space to be switched to a color corresponding to a to-be-available state of the parking space.

16. The apparatus according to any one of claims 10 to 14, wherein the status indication of the parking space indicates the to-be-available state of the parking space by using a digital light having a particular color; and the status-light control module is specifically configured to: based on the predicting that the parking space used by the vehicle driver is available within a subsequent first time, a subsequent second time, or a subsequent third time, predict, according to the first time, the second time, or the third time, that the parking space is available within a fourth time, and display the fourth time by using the digital light having the particular color.

17. A parking space navigation method, wherein the method comprises: obtaining information of a to-be-available parking space; and navigating a user to a position of the to-be-available parking space according to the information of the to-be-available parking space.

18. The method according to claim 17, wherein before the obtaining information of a to-be-available parking space, the method further comprises: obtaining information of an available parking space in a garage, and if a quantity of available parking spaces in the garage is zero, obtaining the information of the to-be-available parking space.

19. The method according to claim 17, wherein after the obtaining information of a to-be-available parking space, and before the navigating a user to a position of the to-be-available parking space, the method further comprises: obtaining information of an available parking space in a garage; and the navigating a user to a position of the to-be-available parking space comprises: if a quantity of available parking spaces in the garage is zero, navigating the user to the position of the to-be-available parking space.

20. The method according to any one of claims 17 to 19, wherein the to-be-available parking space comprises multiple to-be-available parking spaces; before the navigating a user to a position of the to-be-available parking space, the method further comprises: presenting information of the multiple to-be-available parking spaces to the user for the user to select a to-be-available parking space, wherein the information of the parking spaces comprises positions and predicted available times of the parking spaces; and the navigating a user to a position of the to-be-available parking space comprises: receiving the to-be-available parking space selected by the user, and navigating the user to a position of the to-be-available parking space selected by the user.

21. The method according to any one of claims 17 to 19, wherein the to-be-available parking space comprises multiple to-be-available parking spaces; before the navigating a user to a position of the to-be-available parking space, the method further comprises: selecting, from the multiple to-be-available parking spaces, a parking space whose predicted available time is closest; and the navigating a user to a position of the to-be-available parking space comprises: navigating the user to a position of the parking space whose predicted available time is closest.

22. A parking space navigation apparatus, wherein the apparatus comprises a to-be-available parking space obtaining module and a navigation module, wherein the to-be-available parking space obtaining module is configured to obtain information of a to-be-available parking space; and the navigation module is configured to navigate a user to a position of the to-be-available parking space according to the information of the to-be-available parking space.

23. The apparatus according to claim 22, wherein the apparatus further comprises a quantity-of-available-parking-spaces obtaining module, wherein the quantity-of-available-parking-spaces obtaining module is configured to: obtain a quantity of available parking spaces in a garage; and if the quantity of available parking spaces in the garage is zero, the to-be-available parking space obtaining module is configured to obtain the information of the to-be-available parking space.

24. The apparatus according to claim 22, wherein the apparatus further comprises a quantity-of-available-parking-spaces obtaining module, wherein the quantity-of-available-parking-spaces obtaining module is configured to obtain a quantity of available parking spaces in a garage; and if the quantity of available parking spaces in the garage is zero, the navigation module is configured to navigate the user to the position of the to-be-available parking space according to the information of the to-be-available parking space.

25. The apparatus according to any one of claims 22 to 24, wherein the to-be-available parking space comprises multiple to-be-available parking spaces; the apparatus further comprises an available-parking-space selection module, wherein the available-parking-space selection module is configured to: present information of the multiple to-be-available parking spaces to the user for the user to select a to-be-available parking space, wherein the information of the parking spaces comprises positions and predicted available times of the parking spaces; and receive the to-be-available parking space selected by the user; and the navigation module is configured to navigate the user to a position of the to-be-available parking space selected by the user.

26. The apparatus according to any one of claims 22 to 24, wherein the to-be-available parking space comprises multiple to-be-available parking spaces; the apparatus further comprises an available-parking-space selection module, wherein the available-parking-space selection module is configured to select, from the multiple to-be-available parking spaces, a parking space whose predicted available time is closest; and the navigation module is configured to navigate the user to a position of the parking space whose predicted available time is closest.

27. A parking space service system, wherein the system comprises the parking space determining apparatus for a parking space according to any one of claims 9 to 16 and the navigation apparatus according to any one of claims 22 to 26, wherein the navigation apparatus is configured to: obtain a quantity of available parking spaces in a garage; if the quantity of available parking spaces in the garage is zero, obtain information of a to-be-available parking space by using the parking space determining apparatus for a parking space; and navigate a user to a position of the to-be-available parking space according to the information of the to-be-available parking space.
